# EUROPÄISCHE PATENTANMELDUNG

(11) **EP 1 459 843 A2**
(43) Veröffentlichungstag der Anmeldung: **22.09.2004**
(21) Anmeldenummer: 04006668.0
(22) Anmeldetag: 19.03.2004
(51) Int. Cl.: B23Q 41/02, B23Q 7/00, B23Q 1/60

(54) **Beweglicher Transportbalken mit einem Werkstücktransportschlitten**

(30) Priorität: 21.03.2003 DE 20304653 U; 28.04.2003 DE 10319120; 06.06.2003 DE 10325879
(71) Anmelder: GROB-Werke Burkhart Grob e.K., 87719 Mindelheim (DE)
(72) Erfinder: Lutz, Heinrich, 87742 Dirlewang (DE)
(74) Vertreter: Pfister, Stefan, Dipl.-Phys.

(57) **Zusammenfassung**

Die Erfindung betrifft einen beweglichen Transportbalken (1) mit wenigstens einem darauf beweglich angeordneten Werkstücktransportschlitten (2) für das Be- und Entladen von Bearbeitungsmaschinen (3).

## Beschreibung

Die Erfindung betrifft einen Transportbalken für das Be- und Entladen von Werkstücken in bzw. aus Bearbeitungsmaschinen oder dergleichen.

Für den Transport von Werkstücken zwischen Bearbeitungsmaschinen im Bearbeitungslinien ist es bekannt, diese Werkstücke auf Transportbändern, Gleitbahnen, Friktionsrollenbahnen oder dergleichen zu transportieren. Für das Be- bzw. Entladen dieser Werkstücke von dem Transportband in eine Bearbeitungsmaschine bzw. aus dieser heraus werden dabei nach dem Stand der Technik bisher Werkstück- bzw. Palettenwechsler oder Werkstückumsetzer verwendet. Es sind dabei Werkstück- bzw. Palettenwechsler bekannt, die als Schwenkpalettenwechsler arbeiten, um beispielsweise das Werkstück von dem Transportband aufzunehmen und in die Bearbeitungsmaschine hinein zu transportieren. Für eine derartige Transportweise ist der Werkstück- bzw. Palettenwechsler entweder an der Bearbeitungsmaschine selbst vorzusehen bzw. ein Teil des Transportbandes ist als Werkstück- bzw. Palettenwechsler auszubilden. Es ist sehr aufwendig und weiterhin den Nachteil, dass die Transportbänder bzw. Rollenbahnen für diese entsprechende Umsetzung unterbrochen werden müssen. Ein Umlaufen bzw. Vorbeilaufen von Werkstücken an bestimmten Bearbeitungsmaschinen wird durch diese Lösungen erheblich erschwert. Hinzu kommt, wie bereits erwähnt, der erhebliche anlagentechnische Aufwand für die Installation von Werkstück- bzw. Palettenwechseln oder Umsetzern. Die bisher bekannten Werkstück- bzw. Palettenwechsler oder Umsetzer ermöglichen dabei keinen Transport zwischen zwei oder mehreren Bearbeitungsmaschinen.

Ausgehend von dem zuvor dargestellten Stand der Technik ist es Aufgabe der Erfindung, eine Vorrichtung zum Be- und Entladen von Werkstücken in bzw. aus Bearbeitungsmaschinen anzugeben, die ein schnelles Wechseln von Werkstücken ermöglicht.

Die Erfindung geht von dem zuvor dargestellten Stand der Technik aus und schlägt zur Lösung der gestellten Aufgabe einen beweglichen Transportbalken mit wenigstens einem darauf beweglich angeordneten Werkstücktransportschlitten für das Beund Entladen von Bearbeitungsmaschinen vor. Erfindungsgemäß wird dadurch erreicht, dass dieser bewegliche Transportbalken sowohl ein Be- und Entladen der Bearbeitungsmaschine bzw. des Förderbandes bzw. des Transportbandes erlaubt. Gleichzeitig ist auch den Transport des Werkstückes zwischen wenigstens zwei Bearbeitungsmaschinen gewährleistet. Auch die Kopplung mehrerer auch unterschiedlicher Bearbeitungsmaschinen ist erfindungsgemäß jetzt möglich. Selbst in der einfachsten Ausgestaltung löst die Erfindung damit bereits die gestellte Aufgabe. Der Transportbalken hält dabei beispielsweise außerhalb der Bearbeitungsmaschinen ein für die Bearbeitung anstehendes Werkstück vor, wechselt dann dieses Werkstück, wenn das dort sich befindlichen Werkstück fertig gestellt ist und von einem beispielsweise auf der anderen Seite der Bearbeitungsmaschine angeordneten Transportbalken aus dem Bearbeitungsraum heraustransportiert wurde. Durch die Anordnung eines beweglichen Werkstücktransportschlittens auf dem Transportbalken wird die Geschwindigkeit des Beschickens bzw. des Be- und Entladens von Werkstücken erhöht. Die Ausbildung des erfindungsgemäßen Transportbalkens ermöglicht auch ein Positionieren des Werkstücks in der Bearbeitungsmaschine und anschließendes Herausfahren des Balkens. Damit ist der Transportbalken während der Bearbeitung nicht im Bearbeitungsraum bzw. in der Bearbeitungsmaschine selbst befindlich, so dass eine Verschmutzung mit Spänen, Kühlund Schmiermitteln oder Schleifrückständen vermieden wird. Der erfindungsgemäße Transportbalken kommt daher ohne Schutzmaßnahmen gegen die zur beschriebenen Verschmutzungen aus.

Eine Weiterbildung des erfindungsgemäßen Transportbalkens ist dadurch angegeben, dass der Transportbalken in bzw. auf mindestens einer Führung, vorzugsweise zwei Führungen beweglich geführt ist. Dadurch wird ein einfaches Gleiten zwischen dem Transportband und der Bearbeitungsmaschine bzw. zwischen zwei Bearbeitungsmaschinen ermöglicht, ohne dass innerhalb der Bearbeitungsmaschine bzw. dem Bereich des Transportbandes zusätzliche Führungen bzw. Übergabe- oder Übernahmemittel vorzusehen sind.

Eine Weiterbildung der vorbeschriebenen Lösung sieht vor, dass die Führung als Gleitbahn schienenartig ausgebildet ist.

Die Erfindung ist jedoch nicht auf eine als Gleitbahn schienenartig ausgebildete Führung beschränkt. Vielmehr ist entsprechend einer vorteilhaften Weiterbildung der Erfindung die Führung als Rollenbahn ausgebildet.

Die Führung kann dabei X-förmig, U-förmig, T-förmig oder doppel-T-förmig ausgebildet sein, wobei vorzugsweise die dem Transportbalken zugewandte Seite der Führung in einer zu der Form der Führung korrespondierend ausgebildeten Nut des Transportbalkens selbst geführt ist.

Entsprechend einer Weiterbildung der erfindungsgemäßen Lösung ist es vorgesehen, dass die Führung mit Rollen des Transportbalkens zusammenwirkt. Der Transportbalken selbst wird dabei dann von Rollen getragen, die mit der Führung formschlüssig zusammen wirken.

Der Transportbalken kann entsprechend einer vorteilhaften Weiterbildung der erfindungsgemäßen Lösung selbstverständlich auch von Kugeln getragen werden, die mit der Führung formschlüssig zusammenwirken.

Ein weiterer Aspekt ist dadurch angegeben, daß zwischen Führung und Transportbalken wenigstens eine Gleitschiene beziehungsweise ein Gleitschuh angeordnet ist.

Dabei ist es selbstverständlich von Vorteil, wenn die Gleitschiene aus Material mit selbstschmierenden Eigenschaften gebildet ist. Dies kann beispielsweise ein Gußmaterial sein, welches selbstschmierende Eigenschaften besitzt. Selbstverständlich kann die Gleitschiene auch aus anderem Material erhalten sein, was dann zur Folge hat, daß zusätzliche Schmiermittel eingesetzt werden müssen.

Entsprechend einer vorteilhaften Weiterbildung der Erfindung ist es weiterhin vorgesehn, daß die Führungen den Transportbalken lediglich abschnittsweise zur Führung umfassen.

Die Erfindung zeichnet sich auch dadurch aus, dass der Werkstücktransportschlitten auf dem Transportbalken gleitend geführt ist. Damit wird ein Verschieben des Werkstücktransportschlittens auf dem Transportbalken ermöglicht, so dass der Werkstücktransportschlitten dann in dem Bearbeitungsraum einer Bearbeitungsmaschine hinein gleiten kann, wenn der Transportbalken 1 dort positioniert ist. In gleicher Weise ist es vorgesehen, dass der Werkstücktransportschlitten neben bzw. über dem Transportband positioniert wird, zur Übernahme eines Werkstückes von diesem Transportband.

Eine Weiterbildung der Erfindung zeichnet sich dadurch aus, daß der Werkstücktransportschlitten hängend auf dem Transportbalken angeordnet ist. Diese hängende Anordnung ermöglicht zugleich eine platzsparnde Konstruktion des erfindungsgemäßen Transportbalkens.

Es hat sich weiterhin als Vorteil herausgestellt, wenn die Führung als Schlitz beziehungsweise schlitzartig ausgebildet ist.

Entsprechend einer vorteilhaften Weiterbildung ist es jedoch auch vorgesehen, daß in der Führung Rollen, Kugeln oder dergleichen zur Verringerung des Reibungswiderstandes vorgesehen sind.

Erfindungsgemäß wurde gefunden, dass es von Vorteil ist, wenn der Werkstücktransportschlitten durch Räder in dem Transportbalken geführt ist. Dies ermöglicht, den Gleit- bzw. Reibungswiederstand für die Bewegung des Werkstücktransportschlittens auf dem Transportbalken zu verringern.

Ein weiterer Aspekt des erfindungsgemäßen Transportbalkens ist dadurch angegeben, dass der Werkstücktransportschlitten und der Transportbalken eine gleichartige äußere Form aufweisen, derart, dass der Werkstücktransportschlitten auf dem Transportbalken auf- bzw. überschiebbar ist.

Dabei ist von besonderem Vorteil, wenn der Transportbalken, in dem der Führung zugewandten Teil im wesentlichen rechteckig und im gegenüberliegenden Teil dreieckig mit nach zum Werkstücktransportschlitten weisender Spitze, beispielsweise profilartig ausgebildet ist.

Für den Antrieb des Transportbalkens ist erfindungsgemäß ein Zahnstangenantrieb oder dergleichen vorgesehen, welcher vorzugsweise auf der geführten Seite des Transportbalkens angeordnet ist.

Als besonders vorteilhaft hat sich dabei herausgestellt, wenn für den Antrieb des Transportbalkens und des Werkstücktransportschlittens ein gemeinsamer Antrieb verwendet wird.

Dabei ist es weiterhin von Vorteil, wenn der Werkstücktransportschlitten und der Transportbalken derart miteinander gekoppelt sind, dass eine Bewegung des Transportbalkens eine gleichzeitige Bewegung des Werkstücktransportschlittens bewirkt. Der Vorteil der Erfindung liegt insbesondere darin, dass der Transportbalken nur bei Bedarf in die Bearbeitungsmaschine einzuführen ist, nämlich dann, wenn das Werkstück zu wechseln ist. In der Bearbeitungsstellung des Werkstückes wird der Transportbalken einfach aus der Maschine wegbewegt. Durch den gekoppelten Antrieb wird dabei das Werkstück noch schneller aus der Bearbeitungsmaschine heraustransportiert. Bei geschickter Abfolge der Taktung können dabei natürlich Be- und Entladezyklen sehr gut aufeinander abgestimmt werden. Das Entfernen des Balkens während der Bearbeitung bietet auch die Möglichkeit, dass der Balken nicht als Spänefänger für bei der Bearbeitung anfallende Späne wirkt und diese Späne entsprechend verschleppt. Es ist daher möglich, die Bewegungsbahn des Transportschlittens nicht für einen Spänebefall auszulegen. Dadurch werden entsprechende konstruktionstechnische Maßnahmen, die bei Transportbahnen mit einem Spänebefall erforderlich sind, vermieden. Es entstehen keine Behinderungen des Betriebes, weil der Transportbalken ja während der Bearbeitung sich nicht im Bearbeitungsraum der Bearbeitungsmaschine befindet.

Eine vorteilhafte Ausbildung des erfindungsgemäßen Transportbalkens sieht vor, daß der Werkstücktransportschlitten als beweglicher Teil eines Transportbandes beziehungsweise einer Transportbahn ausgebildet ist. Durch diese erfindungsgemäße Art der Ausbildung des Transportbalkens ist es ermöglicht, einen Teil eines Transportbandes gleichzeitig als Werkstücktransportschlitten zu verwenden, der auf dem Transportbalken in gleicher Weise wie der Werkstücktransportschlitten geführt ist. Dadurch wird der Aufwand des Transportbalkens beziehungsweise des Transportsystems insgesamt verringert, wenn beispielsweise ein Transportband bereits vorgesehen ist. Es ist hierbei lediglich erforderlich, das Transportband beziehungsweise die Transportbahn derart zu konzipieren, daß ein Teil dieses Bandes von dem Transportbalken als Werkstücktransportschlitten verwendet wird beziehungsweise daß dieser Werkstücktransportschlitten passungsgenau in das Transportband beziehungsweise in die Transportbahn einfügbar ist.

Eine vorteilhafte Weiterbildung der zuvor beschriebenen Lösung sieht vor, daß zwei bewegliche Teile einer Transportbahn parallel zu der Transportbahn und zur Bearbeitungsmaschine auf dem Transportbalken angeordnet sind. Während ein beweglicher Teil der Transportbahn beispielsweise als Werkstücktransportschlitten auf dem Transportbalken verwendet wird, wird gleichzeitig der zweite (im gewissen Sinne ein Vorratstransportbahnschickung der Bearbeitungsmaschine ein Weitertransport beziehungsweise Vorbeitransport von weiteren Werkstücken an der gerade zu beschickenden Bearbeitungsmaschine erfolgen kann.

Eine vorteilhafte Weiterbildung der Erfindung sieht demnach vor, daß ein beweglicher Teil das Transportband komplettiert, während ein Werkstück auf dem als beweglicher Teil ausgebildeten Werkstücktransportschlitten in die Bearbeitungsmaschine transportiert wird beziehungsweise dort positioniert und gespannt wird.

Erfindungsgemäß wurde auch gefunden, daß es von Vorteil ist, wenn zwei bewegliche Teile einer Transportbahn als Werkzeugtransportschlitten ausgebildet, von zwei parallel angeordneten Transportbändern derart auf dem Transportbalken angeordnet sind, daß sie zwei Werkstücke gleichzeitig von den Transportbändern, welche in dieser Ausführungsform parallel zueinander angeordnet sind, in die Bearbeitungsmaschine transportieren und dort positionieren können beziehungsweise aus der Bearbeitungsmaschine zu den Transportbändern transportieren. In gleicher Weise ist auch eine wechselseitige Übernahme bzw. Übergabe gegeben.

Eine Weiterbildung des zuvor beschriebenen Transportbalkens sieht demnach vor, dass der Werkstücktransportschlitten durch ein Getriebe, vorzugsweise ein Zahnradgetriebe, bestehend aus Zahnrädern und Kette bzw. Zahnriemen oder dergleichen, mit dem Transportbalken gekoppelt ist.

Das Getriebe kann dabei ein Übersetzungsverhältnis gleich 1 : 1 oder auch ungleich 1 : 1 aufweisen, je nachdem ob die Geschwindigkeit des Werkstücktransportschlittens erhöht oder verringert werden soll. Dies bezieht sich jeweils auf eine Ausführungsform der Erfindung.

Eine Weiterbildung des erfindungsgemäßen Transportbalkens sieht vor, dass das Getriebe ein variierbares Übersetzungsverhältnis aufweist. Hierzu können beispielsweise Schaltgetriebe oder dergleichen eingesetzt werden.

Erfindungsgemäß hat es sich als Vorteil erwiesen, wenn der Werkstücktransportschlitten derart mit dem Transportbalken gekoppelt ist, dass er jeweils in gleicher Transportrichtung des Transportbalkens bewegt wird.

Für die Übergabe bzw. Übernahme der Werkstücke besitzt der Werkstücktransportschlitten erfindungsgemäß eine korbartige Aufnahme, welche vorteilhafterweise auf der dem Werkstück bzw. dem Werkstückträger zugewandten Seite des Werkstücktransportschlittens angeordnet ist. Die korbartige Aufnahme des Werkstücktransportschlittens ist dabei derart gestaltet, das sowohl die Übernahme von Werkstücken, als auch von Werkstückträgern oder Paletten, auf denen Werkstücke beispielsweise angeordnet werden, ermöglicht ist.

Ein weiterer Aspekt der Erfindung ist dadurch angegeben, dass eine Spannvorrichtung an dem Werkstücktransportschlitten vorgesehen ist, mittels derer die Werkstücke, Werkstückträger oder Paletten gespannt und/oder vorzugsweise gleichzeitig indexiert werden.

Erfindungsgemäß wurde auch gefunden, daß es von Vorteil ist, wenn ein Greifer an der korbartigen Aufnahme beziehungsweise an dem Werkstücktransportschlitten vorgesehen ist, der die Werkstücke zum Auf- beziehungsweise Ablegen greift.

Von Vorteil ist es dabei, wenn der Greifer gleichzeit als Spannvorrichtung ausgebildet ist.

Eine Weiterbildung der Erfindung sieht auch vor, daß eine feste Spannvorrichtung an dem Werkzeugtransportschlitten beziehungsweise an der korbartigen Aufnahme vorgesehen ist.

Dabei ist es von Vorteil, wenn die Spanneinrichtung an der korbartigen Aufnahme des Werkstücktransportschlittens, insbesondere an der dem aufzunehmenden Werkstück während der Aufnahme bzw. Übergabe zugewandten Seite, vorgesehen ist.

Als Spannvorrichtung ist es dabei vorgesehen, Spanneisen beispielsweise einzusetzen, die das Werkstück positionieren und/oder spannen.

Die Spannvorichtung ist entsprechend einer vorteilhaften Ausbildung der Erfindung derart ausgebildet, daß beim Spannen des Werkstückes beziehungsweise des Werkstückträgers diese leicht angehoben werden, um das Werkstück beziehungsweise den Werkstückträger von der korbartigen Aufnahme abzuheben. Dies ist beispielsweise dann von Vorteil, wenn der Transportbalken aus der Bearbeitungsmaschine heraustransportiert werden soll. Dadurch wird ein entsprechender Zwischenraum erhalten, der es ermöglicht, dann den Transportbalken herauszuführen, ohne mit dem Werkstück beziehungsweise dem Werkstückträger zu kollidieren.

Der erfindungsgemäße Transportbalken ist in gleicher Weise für eine stehende Anordnung des Werkstückes, des Werkstückträgers oder der Palette auf dem Werkstücktransportschlittens für eine stehende Bearbeitung in der Bearbeitungsmaschine geeignet als auch für eine liegende bzw. hängende Anordnung des Werkstückes für eine jeweils entsprechende Bearbeitungsart in der Bearbeitungsmaschine. Als liegende Anordnung ist dabei eine um 90° versetzte Position zur "normalen", stehenden Anordnung eines solchen Transportbalkens zu verstehen. Beispielsweise für den Transport von Werkstücken in Bearbeitungsmaschinen mit waagerecht angreifenden Werkzeugspindeln ist eine derartige Anordnung von Vorteil. Die Positionierung kann dadurch beispielsweise vereinfacht werden. In gleicher Weise ist auch eine hängende Anordnung für von unten angreifende Werkzeuge vorgesehen.

Die Erfindung betrifft auch eine Bearbeitungsmaschine bzw. ein Bearbeitungszentrum mit mindestens einem Transportbalken nach einem oder mehreren der vorgehenden Ansprüche.

Die Erfindung ist nicht nur auf Bearbeitungsmaschinen mit spanabhebender Bearbeitung beschränkt. In gleicher Weise ist der erfindungsgemäße Transportbalken für die Beschickung von Umform- oder Füge- oder Trenn- oder Prüf- bzw. Mess- oder Oberflächenbearbeitungsmaschinen geeignet. Als erfindungsgemäße Bearbeitungsmaschine mit wenigstens einem Transportbalken nach der Erfindung ist es weiterhin vorgesehen, Oberflächenbehandlungsmaschinen, Montage- bzw. Demontagemaschinen, Justage- oder Kennzeichnungsmaschinen bzw. Ver- und Entpackungs- oder Reinigungsmaschinenstationen oder dergleichen einzusetzen, diese mit Werkstücken zu beschicken bzw. Werkstücke aus diesen Maschinen herauszutransportieren.

Die Erfindung betrifft auch eine Bearbeitungslinie mit einer Vielzahl von Bearbeitungsstationen, wobei wenigstens zwei Bearbeitungsstationen durch wenigstens einen Transportbalken nach einem oder mehreren der zuvor beschriebenen Ausführungsformen miteinander bzw. untereinander verbunden sind.

Eine vorteilhafte Weiterbildung der zuvor beschriebenen Lösung sieht vor, daß die Bearbeitungsmaschinen linear hintereinander angeordnet sind, wobei zwischen den einzelnen Bearbeitungsmaschinen die erfindungsgemäßen Transportbalken, wie zuvor beschrieben, für einen Transport der Werkstücke zwischen den einzelnen Bearbeitungsstationen angeordnet sind.

Ein Weiterbildung der Erfindung sieht auch vor, daß die Bearbeitungsmaschinen entlang wenigstens einer Transportbahn beziehungsweise eines Transportbandes parallel dazu angeordnet sind, wobei Transportbalken, wie zuvor beschrieben, dann das Werkstück von der Transportbahn beziehungsweise dem Transportband in die Bearbeitungsstation fördern beziehungsweise ein Werkstück aus der Bearbeitungsstation auf das Transportband zurückfördern, wenn dieses in der Station abschließend bearbeitet wurde.

Zusammengefasst werden die Vorteile der erfindungsgemäßen Lösung darin gesehen, dass der erfindungsgemäße Transportbalken sowohl ein Be- und Entladen der Bearbeitungsmaschine bzw. der Transportbänder erlaubt und gleichzeitig auch den Transport von Werkstücken zwischen wenigstens zwei Bearbeitungsmaschinen ermöglicht. Dabei ist es selbst in der einfachsten Ausgestaltung der Erfindung möglich, ein sehr vorteilhaftes Hinein- bzw. Heraustransportieren von Werkstücken in bzw. aus Bearbeitungsmaschinen zu erreichen. Die erfindungsgemäß vorgesehene Kopplung des Antriebes von Transportbalken und Werkstücktransportschlitten ermöglicht eine Beschleunigung der Bewegung der Werkstücke für eine Beschickung bzw. Entnahme aus den Bearbeitungsmaschinen. Es wird weiterhin nur ein einziger Antrieb für die Bewegung des Transportbalkens und des Werkstücktransportschlittens benötigt. Ein weiterer besonderer Vorteil der Erfindung liegt darin, dass der Transportbalken nur bei Bedarf in die Maschine einzuführen ist, nämlich dann, wenn das Werkstück zu wechseln ist. In der Bearbeitungsstellung befindet sich der Transportbalken nicht in der Bearbeitungsmaschine, so dass eine Verschmutzung mit Spänen oder Kühlmitteln und dergleichen vermieden wird. Der erfindungsgemäße Transportbalken lässt sich dadurch einfacher fertigen, indem keine Schutzmaßnahmen vor derartigen Verschmutzungen vorgesehen werden müssen.

Ein weiterer Vorteil des erfindungsgemäßen Transportbalkens ist dadurch angegeben, dass dieser sowohl für stehende oder hängende bzw. liegende Bearbeitung in der Maschine eingesetzt werden kann. Das Werkstück wird dabei je nach Erfordernis entweder stehend, (quer)liegend oder hängend transportiert. Es ist dazu lediglich erforderlich, den Transportbalken entsprechend der gewünschten Ausführungsart zu positionieren bzw. anzuordnen.

Der Transportbalken ist auch komplett unabhängig von der konkreten Ausgestaltung der Bearbeitungsmaschine, egal, ob es sich um eine einfache Maschine oder um ein Bearbeitungszentrum handelt.

Die Erfindung wird nachfolgend anhand von Ausführungsbeispielen und Zeichnungen weiter beschrieben. Es zeigen:
- Fig. 1: Eine Seitenansicht einer Ausführungsform des erfindungsgemäßen Transportbalkens;
- Fig. 2: Schnittdarstellung durch eine Ausführungsform der Erfindung;
- Fig. 3: Anordnung eines Transportbalkens zwischen zwei Bearbeitungsmaschinen und
- Fig. 4: weitere Ausführungsform einer Anordnung des Transportbalkens;
- Fig. 5a + b: lineare Anordnung von Bearbeitungsmaschinen mit erfindungsgemäßem Transportbalken;
- Fig. 6a + b: parallele Anordnung von Bearbeitungsmaschinen mit einer Ausführungsform der Erfindung;
- Fig. 7 - 9: weitere Ausführungsformen der Erfindung;
- Fig. 10: Detailansicht aus der Fig. 2;
- Fig. 11: weitere Ausführungsform der Erfindung;
- Fig. 12: Anordnung eines Transportbalkens zwischen zwei Bearbeitungsstationen.

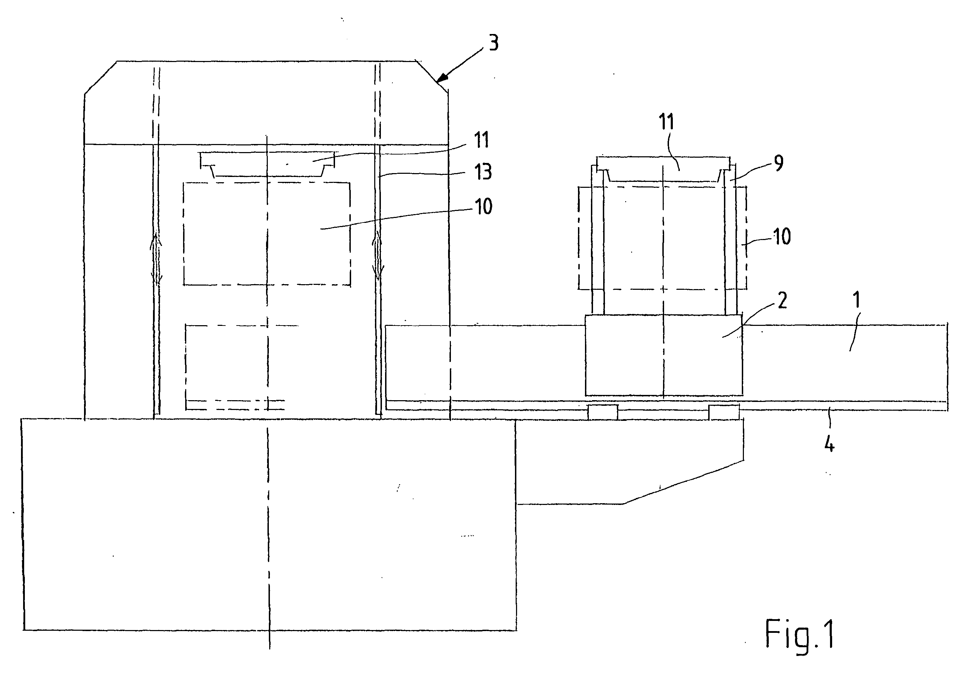

Die Figur 1 zeigt eine Seitenansicht einer Ausführungsform des erfindungsgemäßen Transportbalkens. Es handelt sich dabei um eine Seitenansicht mit einer Anordnung eines Transportbalkens 1 an einer Bearbeitungsmaschine 3. Auf dem Transportbalken 1 ist der Werkstücktransportschlitten 2 angeordnet. Auf diesem Werkstücktransportschlitten 2 befindet sich ein Werkstück 10, welches beispielsweise von einem Werkstückträger 11 gehalten ist. Der Werkstückträger 11 sitzt dabei auf einer korbartigen Aufnahme 9. Der Transportbalken 1 selbst ist auf einer Führung 4 geführt. Der Werkstücktransportschlitten 2 ist dabei auf dem Transportbalken 1 ebenfalls beweglich geführt. Wie in der gestrichelten Darstellung innerhalb der Bearbeitung Maschine 3 ersichtlich, kann der Transportbalken zur Übernahme bzw. Übergabe eines Werkstückes 10 in die Bearbeitungsmaschine 3 hineinbewegt werden. Während der Bewegung des Transportbalkens 1 bewegt sich in gleicher Weise der Werkstücktransportschlitten 2 auf dem Transportbalken 1, so dass die Bewegungsabläufe insgesamt beschleunigt werden. Die gestrichelte Darstellung auf der linken Seite der Figur 1 zeigt dabei die Stellung des erfindungsgemäßen Transportbalkens innerhalb der Bearbeitungsmaschine 3 zur Übergabe bzw. Übernahme eines Werkstückes 10. In der Darstellung entsprechend der Figur 1 ist der Transportbalken 1 in der dargestellten Situation zur Hälfte aus der Bearbeitungsmaschine 3 herausgefahren. Der Transportbalken 1 hält dabei zum Beispiel das Werkstück 10 außen zum Wechseln vor und beschickt dann wieder den Bearbeitungsraum, wenn dies erforderlich bzw. ermöglicht ist. Der nach links versetzte Transportbalken 1 ist dabei für diese Stellung gestrichelt angedeutet. Der Vorteil der Erfindung liegt insbesondere darin, dass der Transportbalken 1 nur bei Bedarf in die Bearbeitungsmaschine 3 einzuführen ist, nämlich dann, wenn das Werkstück 10 zu wechseln ist.

In der Bearbeitungsstellung wird der Transportbalken 1 einfach wegbewegt. Wie aus der Figur 1 ersichtlich, befindet sich beidseitig des Bearbeitungsraumes der Bearbeitungsmaschine 3 eine nur schematisch angedeutete Tür 13, welche bedarfsweise geöffnet bzw. geschlossen wird. Das Entfernen des Transportbalkens 1 während der Bearbeitung bietet dabei die Möglichkeit, dass der Transportbalken selbst nicht als Spänefänger wirkt und Späne entsprechend verschleppt. Die Bewegungsbahn des Transportbalkens 1 und des Werkstücktransportschlittens 2 sind daher nicht für einen Spänebefall auszulegen. Durch das Herausfahren des Transportbalkens 1 aus der Bearbeitungsmaschine 3 während der Bearbeitung entstehen keine Behinderungen durch Späneanfall für den Transportbalken 1 und den Werkstücktransportschlitten 2 und somit keine Behinderungen des Betriebes.

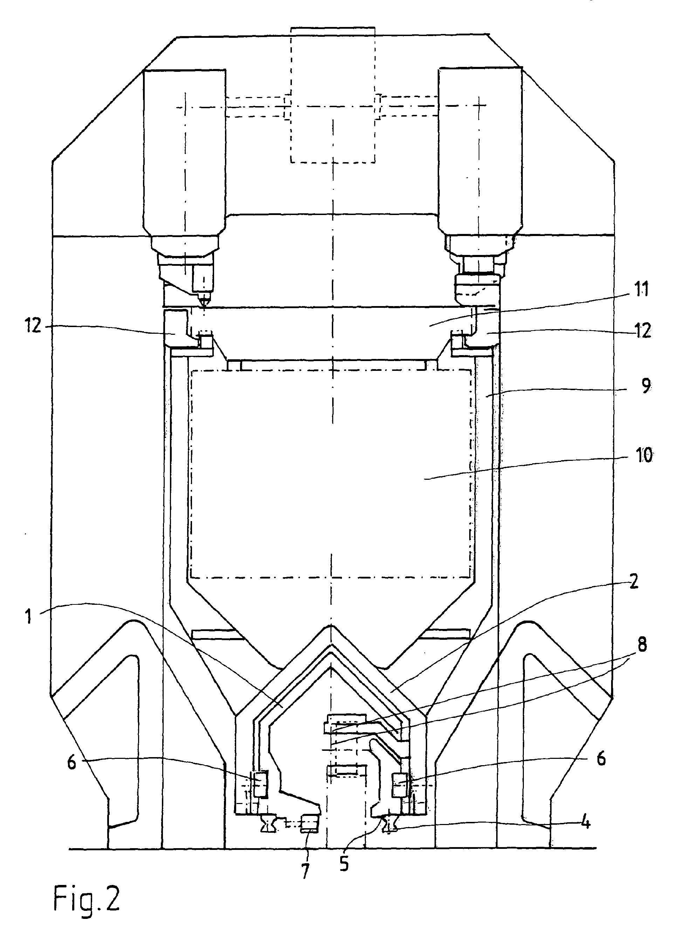

Die Figur 2 zeigt eine Schnittdarstellung durch eine Ausführungsform der Erfindung. Anhand dieser Schnittdarstellung wird im weiteren die Funktionsweise des erfindungsgemäßen Transportbalkens 1 erläutert. Der erfindungsgemäße Transportbalken 1 ist auf Führungen 4 geführt, welche in dieser Ausführungsform X-artig bzw. doppel- T -artig ausgebildet sind. Die dem Transportbalken 1 zugewandte Seite der Führung 4 greift dabei in eine zu der Form der Führung 4 korrespondierend ausgebildete Nut 5 des Transportbalkens 1 ein. Auf dem Transportbalken 1 befindet sich der Werkstücktransportschlitten 2. Der Werkstücktransportschlitten 2 besitzt in etwa die gleiche äußere Kontur wie der Transportbalken 1, er ist jedoch derart ausgebildet, dass er über den Transportbalken 1 gleiten kann. Der Werkstücktransportschlitten 2 besitzt Räder 6, die in dem Transportbalken 1 geführt sind. Damit ist ein leichtes Gleiten bzw. Bewegen des Werkstücktransportschlittens 2 auf dem Transportbalken 1 ermöglicht.

Zum Antrieb des Transportbalkens 1 befindet sich ein Zahnstangenantrieb 7 in der Darstellung gemäß Figur 2 auf der Unterseite des Transportbalkens 1. Der Zahnstangenantrieb 7 ist mit einem Zahnradgetriebe 8 des Werkstücktransportschlittens 2 derart gekoppelt, dass bei einer alleinigen Bewegung des Transportbalkens 1 auch schon der Werkstücktransportschlitten 2 bewegt wird. Die Kopplung vom Transportbalken und Werkstücktransportschlitten ermöglicht für den Antrieb des erfindungsgemäßen Transportbalkens 1 lediglich einen einzigen Antrieb vorzusehen, der sowohl den Transportbalken 1 als auch den Werkstücktransportschlitten gleichzeitig antreibt. Der Vorteil einer Kopplung von Transportbalken 1 und Werkstücktransportschlittens 2 besteht weiterhin darin, dass durch die Bewegung die Kopplung der Bewegung des Transportbalkens 1 mit dem Werkstücktransportschlitten 2 eine wesentlich schnellere Bewegung des Werkstücktransportschlittens 2 in Richtung des Bearbeitungsraumes bzw. von diesem weg erreicht wird. Somit lässt sich beispielsweise die Taktung der Beschickung der Bearbeitungsmaschinen 3 mit Werkstücken 10 insgesamt dadurch verbessern, dass die Taktzeiten verringert werden. Dadurch, dass mit dem gekoppelten Antrieb das Werkstück 10 noch schneller in die Bearbeitungsmaschine 3 hinein bzw. aus der Bearbeitungsmaschine 3 heraustransportiert wird, sind entsprechend einer geschickten Abfolge der Taktung bestimmte Be- und Entladezyklen wesentlich besser als bisher aufeinander abstimmbar.

Der Werkstücktransportschlitten 2 besitzt eine korbartige Aufnahme 9 zur Aufnahme der Werkstücke 10 bzw. von Werkstückträgern 11. Die Figur 2 zeigt dabei eine stehende Ausführungsform des erfindungsgemäßen Transportbalkens 1. Es befinden sich daher der Werkstückträger 11 und das Werkstück 10 oberhalb des Werkstücktransportschlittens 2. Die Erfindung ermöglicht es, in gleicher Weise Werkstücke 10 bei entsprechender Ausbildung ohne Werkstückträger 11 zu transportieren. Es ist jedoch auch vorgesehen, entsprechend ausgebildete Werkstückträger 11 bzw. werkstücktragende Paletten (in dieser Darstellung nicht ersichtlich) zu verwenden. In der Darstellung gemäß der Figur 2 wird der Werkstückträger 11 von einer Spannvorrichtung 12 gespannt. Die Spannvorrichtung 12 kann entsprechend einer Ausbildung der Erfindung so ausgebildet sein, dass gleichzeitig eine Indexierung des Werkstückes möglich ist.

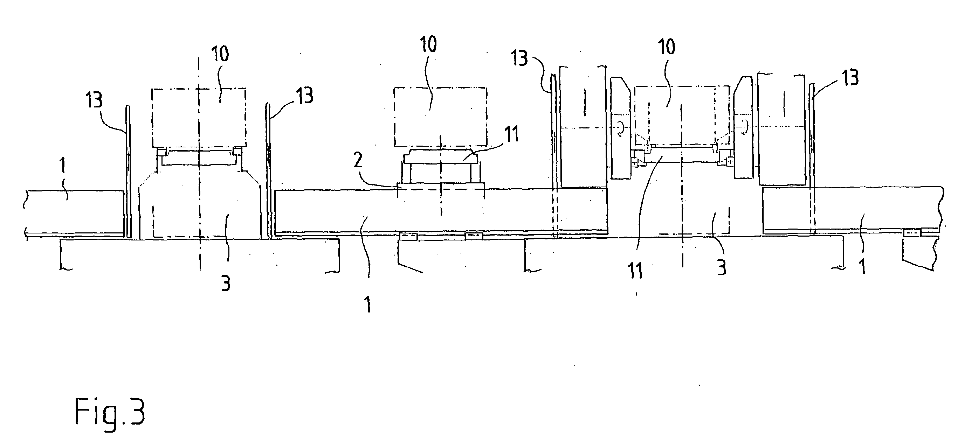

Die Figur 3 zeigt eine Anordnung eines Transportbalkens 1 zwischen zwei Bearbeitungsmaschinen 3. In der Figur 3 ist sehr gut ersichtlich, wie ein erfindungsgemäßer Transportbalken 1, in diesem Fall zwei Bearbeitungsmaschinen 3, miteinander bzw. untereinander verbindet. Auf der linken Seite der Darstellung befindet sich die erste Bearbeitungsmaschine 3. Nur schematisch angedeutet sind dabei die Türen 13 der Bearbeitungsmaschine 3. Innerhalb der ersten Bearbeitungsmaschine 3 befindet sich ein Werkstück 10. Zwischen den beiden Bearbeitungsmaschinen 3 befindet sich ein weiterer Transportbalken 1, welcher auf dem Werkstücktransportschlitten 2 ein Werkstück 10 führt. Das Werkstück 10 ist dabei von einem Werkstückträger 11 getragen. In der rechten Bearbeitungsmaschine 3 befindet sich ebenfalls ein Werkstück 10 zur Bearbeitung. Ist beispielsweise, das in dieser Maschine dargestellte Werkstück 10 fertig bearbeitet, kann der rechts von dieser Maschine angeordnete Transportbalken 1 in die Bearbeitungsmaschine 3 bzw. in deren Bearbeitungsraum hineingefahren werden, um das Werkstück 10 zu übernehmen. In dem Moment, wo der Transportbalken 1 aus dem Bearbeitungsraum der Bearbeitungsmaschine 3 herausfährt, wird der auf der linken Seite der Bearbeitungsmaschine 3 angeordnete Transportbalken 1 in den Bearbeitungsraum der Bearbeitungsmaschine 3 hineingefahren. Dazu muss selbstverständlich die Tür 13 geöffnet werden. Das Werkstück 10 wird dann in der Bearbeitungsmaschine 3 von den dort vorhandenen Übergabe- und Spannmitteln, welche nicht näher bezeichnet sind, übernommen. Dann kann der Transportbalken 1 aus dem Bearbeitungsraum der rechten Bearbeitungsmaschine 3 herausgefahren werden und beispielsweise in die linke Bearbeitungsmaschine 3 geführt werden, um das dort fertiggestellte Werkstück 10 zu übernehmen für einen Weitertransport zur rechten Bearbeitungsmaschine 3.

Durch den erfindungsgemäßen Transportbalken 1 wird es also ermöglicht, mehrere Bearbeitungsmaschinen 3 untereinander zu verbinden, ohne dass diese Bearbeitungsmaschinen 3 die bisher aufwendigen Werkstück- bzw. Palettenwechsler oder Umsetzer für eine Umsetzung der Werkstücke von einer Bearbeitungsmaschine 3 zur nächsten benötigt. Der weitere Vorteil, dass der Transportbalken 1 während der Bearbeitung sich nicht in der Bearbeitungsmaschine 3 bzw. in deren Bearbeitungsraum befindet, wurde bereits beschrieben. Die Ausführungsform entsprechend der Figur 3 zeigt dabei Möglichkeit der Bearbeitung der Werkstücke 10 in stehender Bearbeitung bzw. Anordnung. Dies bedeutet, dass die in der Bearbeitungsmaschine 3 vorhandenen Werkzeuge in der Regel von oben bzw. seitlich an den Werkstücken 10 zur Bearbeitung angreifen.

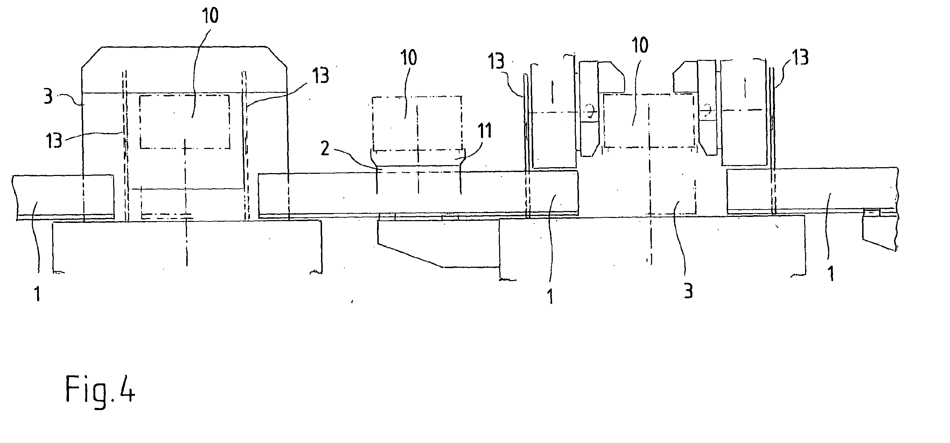

Die Figur 4 betrifft eine weitere Ausführungsform einer Anordnung des erfindungsgemäßen Transportbalkens 1 zwischen zwei Bearbeitungsmaschinen 3. Der Unterschied zur Figur 3 ist dabei lediglich der, dass die Werkstücke 10 zumindest in der rechten Bearbeitungsmaschine 3 für eine hängende Bearbeitung vorgesehen sind. Dies ist beispielsweise in dieser Ausführungsform durch die schwenkbare Werkstückaufnahme innerhalb der Bearbeitungsmaschine 3 möglich. In gleicher Weise ist dies allerdings auch durch eine Anordnung des erfindungsgemäßen Transportbalkens 1 für eine hängende Bearbeitung möglich. Damit könnte beispielsweise die aufwendige Schwenkvorrichtung innerhalb der Bearbeitungsmaschine 3 dann entfallen. Dies ist beispielsweise für spanabhebend arbeitende Werkzeuge von Vorteil, wenn diese von unten an dem Werkstück 10 für eine Bearbeitung angreifen sollen.

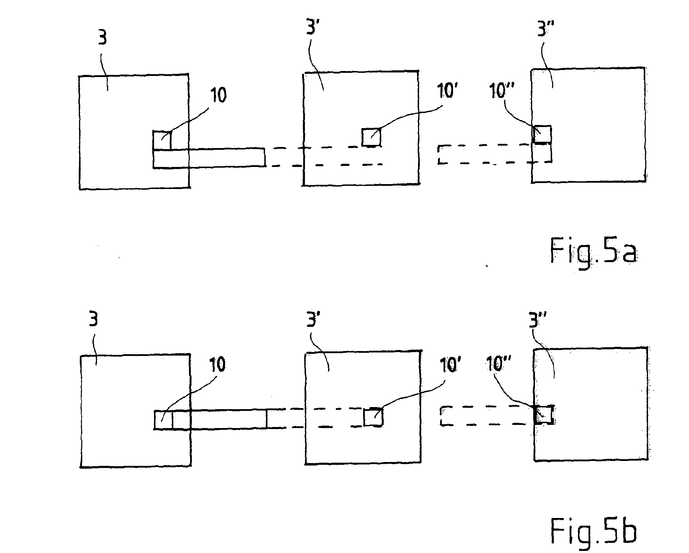

Die Figuren 5a und 5b zeigen eine lineare Anordnung von Bearbeitungsmaschinen mit dazwischen angeordneten erfindungsgemäßen Transportbalken 1. Die Figur 5a ist dabei eine Seitenansicht und die Figur 5a betrifft die gleiche Anordnung als Draufsicht. Mit dem Bezugszeichen 3 ist die Bearbeitunsmaschine bezeichnet. In der Bearbeitunsmaschine 3 ist ein Werkstück 10 auf dem Transportbalken 1 angeordnet. Nachdem die Bearbeitung in dem ersten Bearbeitungszentrum 3 abgeschlossen ist, erfolgt der Transport des Werkstückes in die Bearbeitungsmaschine 3'. Wie dort ersichtlich wird das Werkstück durch den Transportbalken 1 in die Position 10' übernommen. Beispielsweise kann es dann in den dort in der Bearbeitungsmaschine 3' vorhandenen Greif- bzw. Spannsystemen zur Bearbeitung übernommen werden. Nach der Bearbeitung erfolgt der Weitertransport des Werkstückes 10' in die Position 10'', wie ersichtlich in das Bearbeitungszentrum 3". Durch diese Anordnung von erfindungsgemäßen Transportbalken zwischen mehreren Bearbeitungszentren in linearer Schaltung ist es ermöglicht, ohne zusätzlich Transportbänder mehrere Bearbeitungsmaschinen beziehungsweise -zentren hintereinander anzuordnen und die Bearbeitungsfolge entsprechend zu organisieren. Der Werkstücktransport erfolgt dabei, wie aus den Figuren 5a und 5b ersichtlich, in der Reihenfolge der Bearbeitungsmaschine 3, Bearbeitungsmaschine 3', Bearbeitungsmaschine 3" usw. Selbstverständlich ist es auch möglich, jedoch in der Darstellung gemäß der Figuren 5a und 5b nicht dargestellt, parallel zu den jeweiligen Bearbeitungsmaschinen weitere Bearbeitungsmaschinen anzuordnen, die mittels eines oder mehrerer erfindungsgemäßer Transportbalken miteinander verbunden sind. Dies könnte beispielsweise dann sinnvoll sein, wenn in einer Bearbeitungsmaschine die Werkstücke längere Zeit bearbeitet werden, so daß ein Rückstau von Werkstücken entstehen würde, wenn man keine Ausweichmöglichkeit schafft.

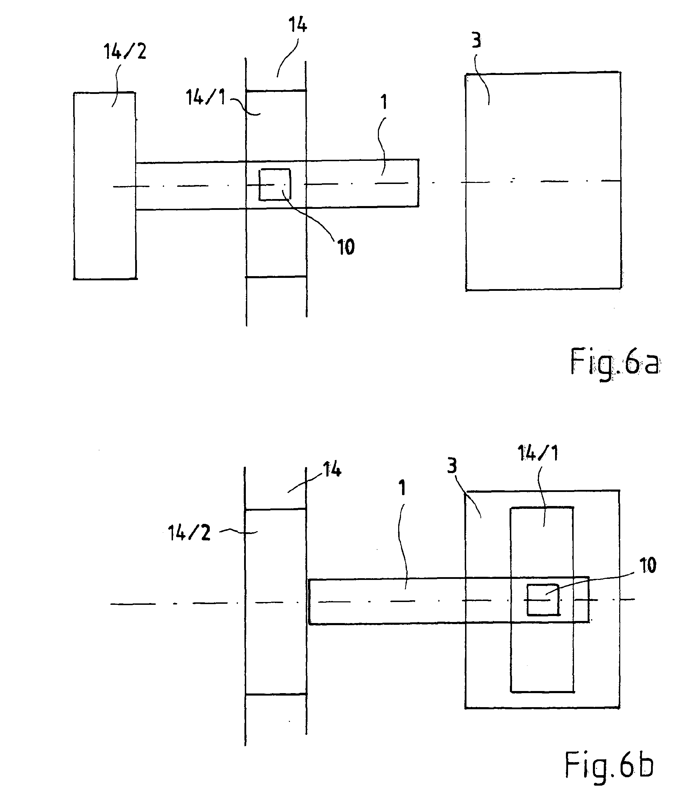

Die Figuren 6a und 6b zeigen parallele Anordnungen von Bearbeitungmaschinen mit einer weiteren speziellen Ausführungsform des erfindungsgemäßen Transportbalkens. In der Figur 6a ist dabei ein Transportband schematisch dargestellt, wobei ein Teil des Transportbandes 14/1 beweglich ausgebildet ist. Neben dem Transportband 14, korrespondierend zu dem beweglichen Teil des Transportbandes 14/1, ist ein weiteres bewegliches Teil des Transportbandes 14/2 angeordnet. Das bewegliche Teil 14/1 des Transportbandes 14 ist dabei als Werkzeugtransportschlitten ausgebildet. In gleicher Weise, in der beispielsweise der Werkstücktransportschlitten 2 in bereits beschriebenen Ausführungsformen des erfindungsgemäßen Transportbalkens 1 das Werkstück 10 auf dem Transportbalken 1 tansportiert erfolgt hier der Transport des Werkstückes 10 gemeinsam mit dem beweglichen Teil des Transportbandes 14/1. Wie aus der Figur 6b ersichtlich, erfolgt die Positionierung des Werkstückes 10 in der Bearbeitungsmaschine 3 gemeinsam mit dem beweglichen Teil des Transportbandes 14/1. Der bewegliche Teil 14/2 des Transportbandes schließt das Transportband 14 wieder, so daß während der Positionierung des des Spannvorganges für das Werkstück 10 in der Bearbeitungsmaschine weitere Werkstücke 10 an der Bearbeitungsmaschine 3 vorbeitransportiert werden können. dies hat zur Folge, daß beispielsweise in der Bearbeitungsmaschine 3, in welcher längere Bearbeitungsprozesse stattfinden, dann dadurch die Bearbeitungsfolge innerhalb einer Bearbeitungslinie nicht mehr behindert wird. Eine Kombination von linearer und paralleler Anordnung ist erfindungsgemäß selbstverständlich ebenfalls gegeben. Dies wurde bereits bei der Beschreibung der Figuren 5a und 5b erwähnt, so daß hier nicht mehr gesondert darauf eingegangen wird. Um den Transportbalken und den als Werkzeugtransportschlitten ausgebildeten Teil des Transportbandes 14/1 während der Bearbeitung nicht zu verschmutzen, kann der Transportbalken gemeinsam mit dem beweglichen Teil des Transportbandes 14/1 auf der rechten Seite der Werkzeugmaschine (in der Darstellung gemäß Figuren 6a und 6b) herausgefahren werden. Damit sind die Vorteile, wie zuvor beschrieben, daß der Transportbalken 1 und der Werkstücktransportschlitten während der Bearbeitung nicht durch Späne, Kühlmittel oder dergleichen verschmutzt werden, weiterhin gegeben.

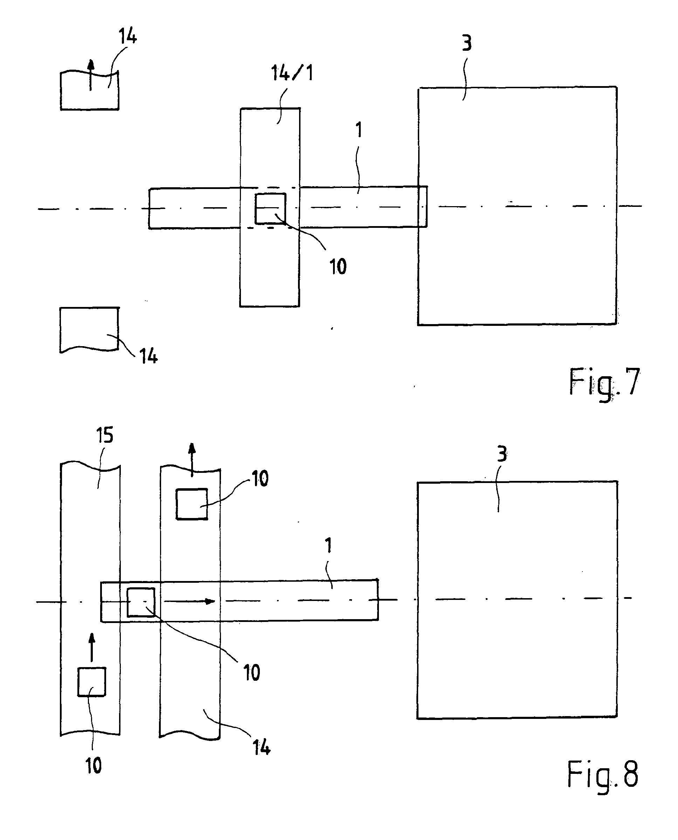

Die Figur 7 zeigt eine weitere Ausführungsform des erfindungsgemäßen Transportbalkens 1, wobei hier ebenfalls ein Teil des Transportbandes 14/1 als Werkstücktransportschlitten ausgebildet ist. Auf diesem beweglichen Teil 14/1 des Transportbandes befindet sich ein Werkstück 10. In der Darstellung gemäß der Figur 7 ist lediglich ein bewegliches Teil 14/1 des Transportbandes 14 vorgesehen, so daß der Werkstückweitertransport während des Ein- beziehungsweise Austransportierens des Werkstückes 10 in die Bearbeitungsmaschine 3 unterbrochen ist.

Die Figur 8 zeigt eine Darstellung, bei der zwei Transportbänder 14 und 15 parallel zueinander angeordnet sind. Auf dem Transportband 15 erfolgt beispielsweise der Antransport der Werkstücke 10. Die Werkstücke 10 werden dann von einer Ausführungsform des erfindungsgemäßen Transportbalkens 1 erfasst und in die Bearbeitungmaschine 3 transportiert. Nachdem die Bearbeitung in der Bearbeitungsmaschine 3 abgeschlossen ist, wird das Werkstück 10 mittels des Transportbalkens 1 auf dem Transportband 14 zum Weitertransport abgelegt. Mittels dieser Ausführungsform der Erfindung ist dabei gleichzeitig sowohl der Werkstückweitertransport als auch eine sinnvolle Verteilung zu anderen Bearbeitungsmaschinen hin gegeben.

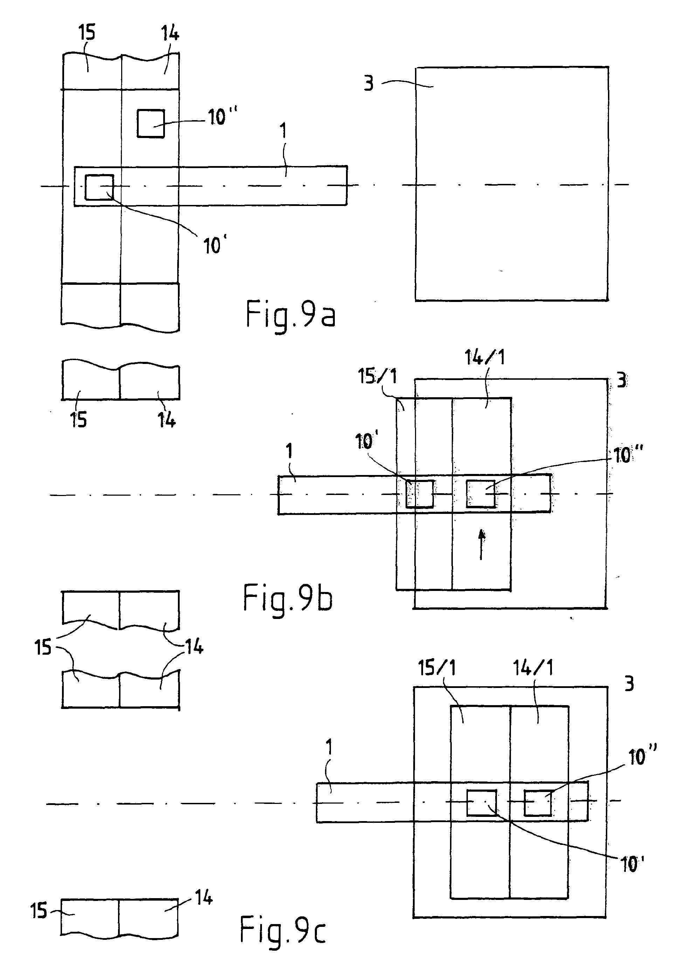

Die Figuren 9a bis 9c zeigen eine weitere Ausführungsform des erfindungsgemäßen Transportbalkens. In der Figur 9a sind zwei Transportbänder 14 und 15 parallel zueinander angeordnet. Auf dem Tansportband 15 befindet sich ein Werkstück 10, welches auf dem als Werkstücktransportschlitten ausgebildeten Teil 15/1 des Transportbandes angeordnet ist. Auf dem Transportband 14 beziehungsweise dessen beweglichem Teil 14/1 befindet sich gerade ein Werkstück 10'', welches auf dem Transportband 14 weitertransportiert werden soll. Nachdem dieses Werkstück 10'' abtransportiert wurde, wird der Transportbalken mit beiden beweglichen Teilen der Transportbänder 14/1 und 15/1 in die Bearbeitungsmaschine gefahren. Das zur Bearbeitung anstehende Werkstück 10' wird dabei in der Bearbeitungsmaschine positioniert, während das gerade bearbeitet Werkstück 10" dann auf dem beweglichen Teil des Transportbandes 14/1 abgelegt wird, wenn das Werkstück 10' positioniert ist. Dies ist dann aus der Figur 9c ersichtlich. Der Transportbalken 1 fördert dann das bereits bearbeitete Werkstück 10" aus der Bearbeitungsmaschine 3 heraus und transportiert dieses mit dem beweglichen Teil des Transportbandes 14/1 dann auf das Transportband 14, wie aus der Figur 9a ersichtlich.

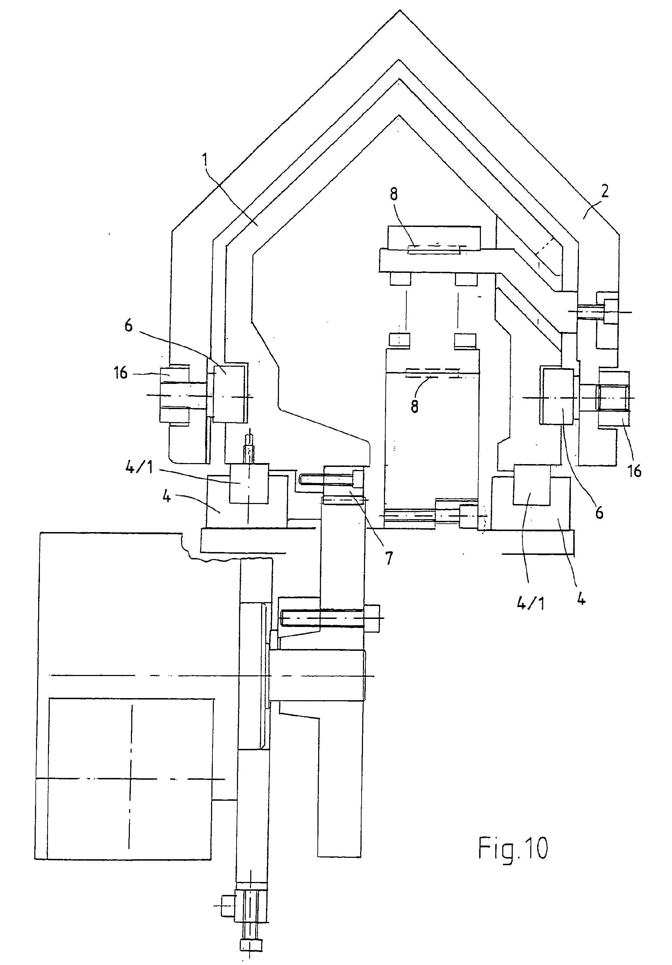

Die Figur 10 zeigt eine vergrößerte Darstellung eines Teiles der Figur 2. Es handelt sich dabei um den unteren Teil der Darstellung gemäß der Figur 2. Mit dem Bezugszeichen 1 ist der Transportbalken beziehungsweise dessen Grundkörper bezeichnet. Auf dem Transportbalken 1 befindet sich der Werkstücktransportschlitten 2. Der Werkstücktransportschlitten ist durch Räder 6 an beziehungsweise auf dem Transportbalken 1 beweglich gelagert. Der gesamte Transportbalken 1 ist auf Führungen 4, wie bereits beschrieben, gführt. Der Antrieb des Transportbalkens erfolgt über den Zahnstangenantrieb 7. Über ein Zahnradgetriebe 8 ist der Werkstücktransportschlitten 2 mit dem Transportbalken 1 verbunden. Der Werkstücktransportschlitten 2 ist mittels Befestungsmittel 16 an dem Transportbalken 1 befestigt. Die Bewegungsabläufe sind bereits bei der Beschreibung der Figuren 1 und 2 beschrieben worden, so daß hierzu eine nochmalige Beschreibung nicht notwendig ist.

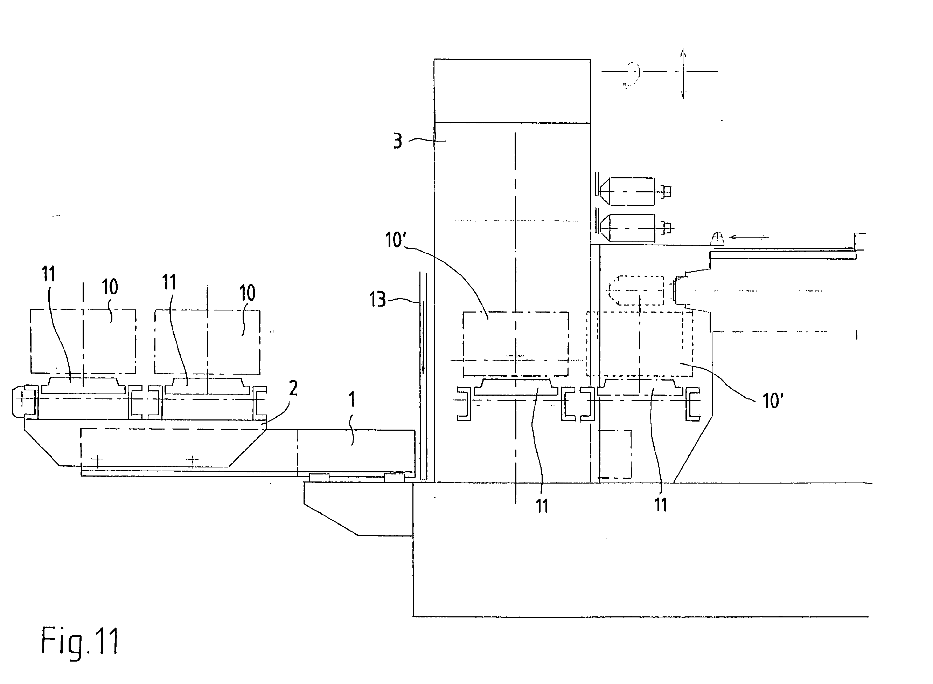

Die Figur 11 zeigt eine weitere Ausführungsform der Erfindung, wie sie beispielsweise als schematische Darstellung in der Figur 9 gezeigt wurde. Auf dem Transportbalken 1 befindet sich ein Werkstücktransportschlitten 2, welcher für die Aufnahme von zwei Werkstücken 10 vorgesehen ist. Die Werkstücke 10 sind dabei von Werkstückträgern 11 getragen. Der Werkstücktransportschlitten 2 kann beispielsweise als beweglicher Teil eines parallel verlaufenden zweiteiligen Tansportbandes ausgebildet sein, wie dies zuvor bereits beschrieben wurde. Auf dem Transportbalken 1 werden die Werkstücke 10 beziehungsweise der Werkstücktransportschlitten 2 nach rechts in die Bearbeitungsmaschine 3 hineingefahren und dort in der Position 10' positioniert. Der Werkstücktransportschlitten 2 beziehungsweise der bewegliche Teil des Transportbandes kann dann zur Bearbeitung aus der Bearbeitungsmaschine 3 herausgefahren werden, so daß auch hier eine Verschmutzung des Transportbalkens beziehungsweise des Werkstücktransporttisches und der entsprechenden Spannvorrichtungen durch Späne, Kühlflüssigkeit oder dergleichen nicht erfolgt. Während der Bearbeitung der Werkstücke 10' ist die Türe 13 der Bearbeitungmaschine 3 geschlossen. Nach der Bearbeitung in der Bearbeitungsmaschine 3 kann dann der Werkstücktransportschlitten 2 wieder in die Bearbeitungsmaschine 3 hineingefahren werden, um die jetzt bearbeiteten Werkstücke zu übernehmen. Dies kann sowohl der abgebildete Werkstücktransportschlitten 2 sein, der dann die Werkstücke in die gleiche Richtung heraustransportiert aus der sie eintransportiert wurden. In gleicher Weise ist es jedoch auch möglich, rechts neben der Bearbeitungsmaschine einen weiteren Transportbalken 1 vorzusehen, der dann die Werkstücke auf der rechten Seite austransportiert. Die Erfindung ist in keinster Weise auf die dargestellte einseitige Aus- und Eintransportweise beschränkt.

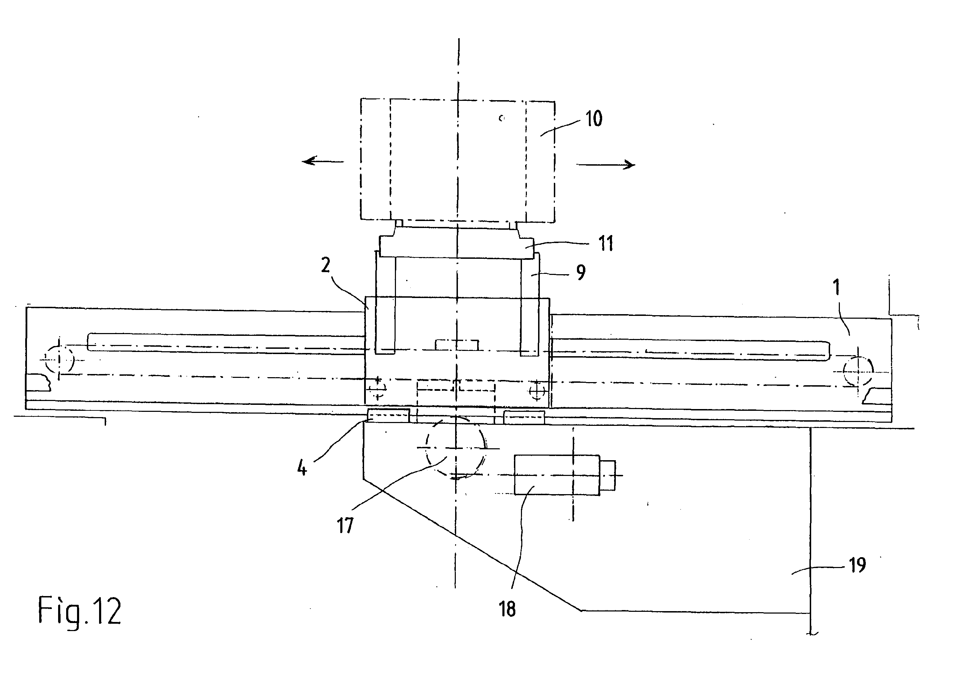

Die Figur 12 zeigt eine Ausführungsform des erfindungsgemäßen Transportbalkens, welcher zwischen zwei Bearbeitungsstationen angeordnet werden kann. Die bisher verwendeten Bezugszeichen werden in gleicher Weise verwendet, wie dies breits beschrieben wurde. Bei dieser besonderen Ausführungsform des Transportbalkens 1 zwischen zwei, nicht dargestellten Bearbeitungsmaschinen 3, ist ein Antrieb 18 vorgesehen, welcher über ein Getriebe 17 den Werkzeugtransportschlitten auf dem Transportbalken 1 bewegt.

Die jetzt mit der Anmeldung und später eingereichten Ansprüche sind Versuche zur Formulierung ohne Präjudiz für die Erzielung weitergehenden Schutzes.

Sollte sich hier bei näherer Prüfung, insbesondere auch des einschlägigen Standes der Technik, ergeben, daß das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

Merkmale, die nur in der Beschreibung offenbart wurden, oder auch Einzelmerkmale aus Ansprüchen, die eine Mehrzahl von Merkmalen umfassen, können jederzeit zur Abgrenzung vom Stande der Technik in den ersten Anspruch übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Beweglicher Transportbalken (1) mit wenigstens einem darauf beweglich angeordneten Werkstücktransportschlitten (2) für das Be- und Entladen von Bearbeitungsmaschinen (3).

2. Transportbalken nach Anspruch 1, **dadurch gekennzeichnet, dass** der Transportbalken (1) in bzw. auf mindestens einer Führung (4), vorzugsweise zwei Führungen, beweglich geführt ist.

3. Transportbalken nach einem oder beiden der vorhergehenden Ansprüche, **dadurch gekennzeichnet, dass** die Führung (4) als Gleitbahn schienenartig ausgebildet ist und/oder die Führung (4) als Rollenbahn ausgebildet ist und/oder die Führung (4) X-förmig, U-förmig, T-förmig oder Doppel-Tartig ausgebildet ist, wobei die dem Transportbalken (1) zugewandte Seite der Führung (4) in einer zu der Form der Führung (4) korrespondierend ausgebildeten Nut (5) des Transportbalkens (1) geführt ist und/oder die Führung (4) mit Rollen des Transportbalkens (1) zusammenwirkt.

4. Transportbalken nach einem oder mehreren der vorhergehenden Ansprüche, **dadurch gekennzeichnet, dass** zwischen Führung (4) und Transportbalken (1) wenigstens eine Gleitschiene bzw. ein Gleitschuh (4/1) angeordnet ist.

5. Transportbalken nach einem oder mehreren der vorhergehenden Ansprüche, **dadurch gekennzeichnet, dass** die Gleitschiene (4/1) aus Material mit selbstschmierenden Eigenschaften gebildet ist.

6. Transportbalken nach einem oder mehreren der vorhergehenden Ansprüche, **dadurch gekennzeichnet, dass** der Werkstücktransportschlitten (2) auf dem Transportbalken (1) gleitend geführt ist und/oder der Werkstücktransportschlitten (2) hängend auf dem Transportbalken (1) angeordnet ist und/oder der Werkstücktransportschlitten (2) durch Räder (6) in dem Transportbalken (1) geführt ist und/oder der Werkstücktransportschlitten (2) und der Transportbalken (1) eine gleichartige äußere Form aufweisen, derart, dass der Werkstücktransportschlitten (2) auf dem Transportbalken (1) auf- bzw. überschiebbar ist.

7. Transportbalken nach einem oder mehreren der vorhergehenden Ansprüche, **dadurch gekennzeichnet, dass** die Führung (4) als Schlitz bzw. schlitzartig ausgebildet ist und/oder in der Führung (4) Rollen, Kugeln oder dergleichen vorgesehen sind und/oder die Führungen (4) den Transportbalken (1) lediglich abschnittsweise zur Führung umfassen.

8. Transportbalken nach einem oder mehreren der vorhergehenden Ansprüche, **dadurch gekennzeichnet, dass** der Transportbalken (1) in dem der Führung (4) zugewandten Teil im wesentlichen rechteckig und im gegenüberliegenden Teil dreieckig mit nach zum Werkstücktransportschlitten (2) weisender Spitze ausgebildet ist.

9. Transportbalken nach einem oder mehreren der vorhergehenden Ansprüche, **dadurch gekennzeichnet, dass** Werkstücktransportschlitten (2) und Transportbalken (1) derart miteinander gekoppelt sind, dass eine Bewegung des Transportbalkens (1) eine Bewegung des Werkstücktransportschlitten (2) bewirkt.

10. Transportbalken nach einem oder mehreren der vorhergehenden Ansprüche, **dadurch gekennzeichnet, dass** der Werkstücktransportschlitten (2) als beweglicher Teil (14/1) eines Transportbandes (14) bzw. einer Transportbahn ausgebildet ist.

11. Transportbalken nach einem oder mehreren der vorhergehenden Ansprüche, **dadurch gekennzeichnet, dass** zwei bewegliche Teile (14/1 und 14/2) einer Transportbahn (14) parallel zu der Transportbahn (14) und zur Bearbeitungsmaschine (3) auf dem Transportbalken (1) angeordnet sind.

12. Transportbalken nach einem oder mehreren der vorhergehenden Ansprüche, **dadurch gekennzeichnet, dass** ein beweglicher Teil (14/2) das Transportband (14) komplettiert, während ein Werkstück (10) auf dem als beweglichen Teil (14/1) ausgebildeten Werkstücktansportschlitten in die Bearbeitungsmaschine (3) transportiert wird bzw. dort positioniert wird und/oder zwei bewegliche Teile (14/1, 14/2) von zwei parallel angeordneten Transportbändern (14, 15) derart auf dem Transportbalken (1) angeordnet sind, dass sie zwei Werkstücke (10) gleichzeitig von den Transportbändern (14, 15) in die Bearbeitungsmaschine (3) transportieren und dort positionieren können bzw. aus der Bearbeitungsmaschine (3) zu den Transportbändern (14, 15) transportieren können.

13. Transportbalken nach einem oder mehreren der vorhergehenden Ansprüche, **dadurch gekennzeichnet, dass** zum Antrieb des Transportbalkens (1) ein Zahnstangenantrieb (7) oder dergleichen vorgesehen ist, welcher vorzugsweise auf der geführten Seite des Transportbalkens (1) angeordnet ist und/oder einen gemeinsamen Antrieb für den Transportbalken (1) und den Werkstücktransportschlitten (2) und/oder der Werkstücktransportschlitten (2) durch ein Getriebe, vorzugsweise ein Zahnradgetriebe (8), bestehend aus Zahnrädern und Kette bzw. Zahnriemen oder dergleichen, mit dem Transportbalken (1) gekoppelt ist.

14. Transportbalken nach einem oder mehreren der vorhergehenden Ansprüche, **dadurch gekennzeichnet, dass** das Getriebe ein Übersetzungsverhältnis gleich oder ungleich 1:1 aufweist und/oder das Getriebe ein variierbares Übersetzungsverhältnis aufweist, vorzugsweise als Schaltgetriebe ausgebildet ist.

15. Transportbalken nach einem oder mehreren der vorhergehenden Ansprüche, **dadurch gekennzeichnet, dass** der Werkstücktransportschlitten (2) derart mit dem Transportbalken (1) gekoppelt ist, dass er jeweils in gleicher Transportrichtung des Transportbalkens (1) bewegt wird und/oder der Werkstücktransportschlitten (2) eine korbartige Aufnahme (9) für das bzw. die Werkstück(e) (10) und/oder Werkstückträger (11) bzw. Paletten aufweist.

16. Transportbalken nach einem oder mehreren der vorhergehenden Ansprüche, **dadurch gekennzeichnet, dass** eine Spannvorrichtung (12) an dem Werkstücktransportschlitten (2) vorgesehen ist, mittels derer die Werkstücke (10), Werkstückträger (11) oder Paletten gespannt und/oder vorzugsweise gleichzeitig indexiert werden und/oder ein Greifer an der korbartigen Aufnahme (9) bzw. an dem Werkstücktransportschlitten (2) vorgesehen ist, der die Werkstücke (10) zum Auf- bzw. Ablegen greift.

17. Transportbalken nach einem oder mehreren der vorhergehenden Ansprüche, **dadurch gekennzeichnet, dass** der Greifer gleichzeitig als Spannvorrichtung (12) ausgebildet ist.

18. Transportbalken nach einem oder mehreren der vorhergehenden Ansprüche, **dadurch gekennzeichnet, dass** eine feste Spannvorrichtung (12) an dem Werkstücktransportschlitten (2) bzw. an der korbartigen Aufnahme (9) vorgesehen ist und/oder eine Spannvorrichtung (12) an der korbartigen Aufnahme (9) des Werkstücktransportschlitten (2), insbesondere an der dem aufzunehmenden Werkstück während der Aufnahme zugewandten Seite, vorgesehen ist und/oder die Spannvorrichtung (12) durch Spanneisen angegeben ist, die das Werkstück (10) positionieren und/oder spannen und/oder die Spannvorrichtung (12) derart ausgebildet ist, dass beim Spannen des Werkstückes (10) bzw. des Werkstückträgers (11) diese angehoben werden, um das Werkstück bzw. den Werkstückträger (11) von der korbartigen Aufnahme (9) abzuheben.

19. Transportbalken nach einem oder mehreren der vorhergehenden Ansprüche, **gekennzeichnet durch** eine stehende Anordnung des Werkstücks (10), des Werkstückträgers (11) oder der Palette auf dem Werkstücktransportschlitten (2) für eine stehende Bearbeitung in der Bearbeitungsmaschine (3) und/oder eine liegende Anordnung des Werkstücks (10), des Werkstückträgers (11) oder der Palette auf dem Werkstücktransportschlitten (2) für eine liegende Bearbeitung in der Bearbeitungsmaschine (3) und/oder eine hängende Anordnung des Werkstücks (10), des Werkstückträgers (11) oder der Palette auf dem Werkstücktransportschlitten (2) für eine hängende Bearbeitung in der Bearbeitungsmaschine (3).

20. Bearbeitungsmaschine bzw. Bearbeitungszentrum mit einem Transportbalken (1) nach einem oder mehreren der vorhergehenden Ansprüche.

21. Bearbeitungsmaschine nach dem vorhergehenden Anspruch 20, **dadurch gekennzeichnet, dass** die Bearbeitungsmaschine (3) als Spanbearbeitungs- oder Umform- oder Füge- oder Trennoder Prüf- bzw. Mess- oder Oberflächenbearbeitungs- bzw. Oberflächenbehandlungs- oder Montage- bzw. Demontageoder Justage- oder Kennzeichnungs- oder Ver- und Entpackungs- oder Reinigungsmaschine, Station oder dergleichen ausgebildet ist.

22. Bearbeitungslinie mit einer Vielzahl von Bearbeitungsstationen (3), wobei wenigstens zwei Bearbeitungsstationen (3) durch wenigstens einen Transportbalken (1) nach einem oder mehreren der vorhergehenden Ansprüche 1 bis 19 miteinander bzw. untereinander verbunden sind.

23. Bearbeitungslinie nach Anspruch 22, **gekennzeichnet durch** eine lineare Anordnung der Bearbeitungsmaschine (3) und/oder eine parallele Anordnung der Bearbeitungsmaschine (3).
